# EUROPÄISCHE PATENTANMELDUNG

(11) **EP 2 783 821 A2**
(43) Veröffentlichungstag der Anmeldung: **01.10.2014**
(21) Anmeldenummer: 14160599.8
(22) Anmeldetag: 18.03.2014
(51) Int. Cl.: B27C 5/10, B23Q 9/00

(54) **Oberfräse**

(30) Priorität: 25.03.2013 DE 102013205247
(71) Anmelder: Mafell AG, 78727 Oberndorf a.N. (DE)
(72) Erfinder: Lauckner, Helmut, 72172 Sulz a. N. (DE); Bantle, Ralf, 78662 Bösingen (DE); Schellhammer, Karl, 72172 Sulz-Fischingen (DE); Richter, Manfred, 78727 Oberndorf (DE)
(74) Vertreter: Manitz, Finsterwald & Partner GbR

(57) **Zusammenfassung**

Eine Oberfräse (11) umfasst einen auf eine Werkstückoberfläche aufsetzbaren Frästisch (13) und eine mit dem Frästisch (13) verbundene Maschineneinheit (15), die ein um eine Werkzeugachse (W) rotierend abgetriebenes Fräswerkzeug umfasst.
Eine solche Oberfräse ist in eine Werkzeugwechselkonfiguration bringbar, in welcher der Frästisch von einem axialen Umgebungsbereich der Werkzeugachse entfernt ist. In der Werkzeugwechselkonfiguration ist somit der Zugang zu dem Fräswerkzeug bzw. zu einer das Fräswerkzeug mit einer Antriebswelle verbindenden Befestigungseinrichtung erleichtert. Der Frästisch (13) kann einen Parallelanschlag (27) zum Ansetzen der Oberfräse an einer Werkstückkante oder an einer Führungsschiene auffassen, wobei die Maschineneinheit (11) gegenüber dem Parallelanschlag (27)um eine parallel zu der Werkzeugachse verlaufende Schwenkachse verschwenkbar ist.
Ein weiterer Aspekt der Erfindung betrifft eine Oberfräse (11) mit einem auf eine Werkstückoberfläche aufsetzbaren Frästisch (13) und einer mit dem Frästisch verbundenen Maschineneinheit, wobei der Frästisch eine auswechselbare Sohle (81) mit einer zum Gleiten über die Werkstückoberfläche ausgebildeten Gleitfläche (85) aufweist.

## Beschreibung

Die vorliegende Erfindung betrifft eine Oberfräse mit einem auf eine Werkstückoberfläche aufsetzbaren Frästisch und einer mit dem Frästisch verbundenen Maschineneinheit, die ein um eine Werkzeugachse rotierend angetriebenes Fräswerkzeug umfasst, wobei der Frästisch einen Parallelanschlag zum Ansetzen der Oberfräse an einer Werkstückkante oder an einer Führungsschiene umfasst.

Oberfräsen werden z.B. zum Einfräsen von Nuten, Kanten oder Profilen in Werkstücke sowie zum Erzeugen von Verzierungen, Mustern oder Schriften auf Werkstückoberflächen verwendet. Die Oberfräse wird hierbei mittels des Frästisches auf die Werkstückoberfläche aufgesetzt und per Hand entlang einer gewünschten Spur geführt. Der Parallelanschlag ermöglicht ein exaktes geradliniges Führen der Maschine.

In der Praxis kommt es bei der Verwendung von Oberfräsen häufig vor, dass ein Benutzer das Gerät bei Einsatz des Parallelanschlags in einer ergonomisch ungünstigen Position halten und führen muss, weil beispielsweise die Stellung eines Handgriffs der Oberfräse in Bezug auf die Position des Benutzers unvorteilhaft ist. Zudem kann es vorkommen, dass eine Skala - beispielsweise eine Tauchtiefenskala - schlecht ablesbar ist, weil sie sich auf der dem Benutzer abgewandten Seite des Gerätegehäuses befindet. Weiterhin kann die Handhabung einer Oberfräse aufgrund eines vorhandenen Schlauchs zur Späneabsaugung erschwert sein, wenn dieser aufgrund seiner Stellung beispielsweise den Zugang zum Handgriff behindert.

Es ist eine Aufgabe der Erfindung, eine Oberfräse der vorstehend beschriebenen Art derart weiterzubilden, dass die Handhabung bei Einsatz des Parallelanschlags vereinfacht wird.

Die Lösung der Aufgabe erfolgt durch eine Oberfräse mit den Merkmalen des Anspruchs 1.

Erfindungsgemäß ist die Maschineneinheit gegenüber dem Parallelanschlag um eine parallel zu der Werkzeugachse verlaufende Schwenkachse verschwenkbar.

Die Maschineneinheit einschließlich etwaiger Handgriffe, Ableseskalen oder Schlauchanschlüsse kann somit vor dem Fräsvorgang in eine für den Benutzer günstige Stellung geschwenkt werden. Da das Verschwenken parallel zu der Werkzeugachse verläuft, wird die Funktionsweise des Parallelanschlags durch das Verschwenken nicht beeinträchtigt. Anders als beispielsweise bei Nutfräsen oder Handkreissägen spielt nämlich bei einer Oberfräse die Drehstellung des Maschinengehäuses relativ zu der Führungsfläche des Parallelanschlags keine Rolle. Dieser Umstand wird erfindungsgemäß dazu genutzt, die Handhabung einer Oberfräse beträchtlich zu vereinfachen.

Weiterbildungen der Erfindung sind in den abhängigen Ansprüchen, der Beschreibung sowie der Zeichnung angegeben.

Es sei an dieser Stelle ausdrücklich darauf hingewiesen, dass die nachstehend beschriebenen Ausführungsformen der Erfindung grundsätzlich voneinander unabhängige technische Aspekte darstellen, die nicht ausschließlich in einer Oberfräse gemäß Anspruch 1 praktikabel sind, sondern prinzipiell auch unabhängig davon sowie unabhängig von anderen Maßnahmen und unabhängig voneinander Anwendung finden können und hier entsprechend unabhängig beansprucht werden.

Eine Ausführungsform der Erfindung sieht vor, dass die Schwenkachse mit der Werkzeugachse zusammenfällt. Somit wird durch das Verschwenken der Abstand zwischen dem Fräswerkzeug und dem Parallelanschlag nicht verändert. Das heißt eine vor dem Verschwenken der Maschineneinheit eingestellte Position des Parallelanschlags muss nach einem etwaigen Verschwenken der Maschineneinheit nicht mehr angepasst werden.

Vorzugsweise ist die Maschineneinheit um wenigstens eine volle Umdrehung, d.h. um 360°, verschwenkbar. Dies ermöglicht eine besonders flexible Anpassung der Drehstellung der Maschineneinheit an die jeweilige Situation.

Die Maschineneinheit kann in vorgegebenen Schwenkstellungen und bevorzugt in jeder möglichen Schwenkstellung gegenüber dem Parallelanschlag arretierbar sein, um ein unerwünschtes Verschwenken der Maschineneinheit während des Fräsvorgangs zu verhindern.

Gemäß einer Ausgestaltung der Erfindung umfasst der Frästisch ein mit der Maschineneinheit verbundenes erstes Frästischteil und ein mit dem Parallelanschlag verbundenes zweites Frästischteil, welche durch eine Schwenklagerung miteinander gekoppelt sind. Aufgrund der zweiteiligen Ausführung des Frästisches ist es problemlos möglich, den Parallelanschlag verstellbar auszubilden und hierfür beweglich in dem zweiten Frästischteil zu lagern. Diese bewegliche Lagerung des Parallelanschlags wird durch das verschwenkbare erste Frästischteil nicht beeinträchtigt.

Eine spezielle Ausgestaltung sieht vor, dass das erste Frästischteil oder das zweite Frästischteil einen Drehteller bildet, welcher, insbesondere gleitend, in einer Drehaufnahme des anderen Frästischteils gelagert ist. Dies ermöglicht eine besonders einfache Konstruktion.

Es können auch Mittel zum Feststellen, insbesondere Verklemmen, des Drehtellers in der Drehaufnahme vorgesehen sein. Beispielsweise kann das als Drehaufnahme ausgeführte Frästischteil in Form einer Klemmschelle ausgebildet sein. Dies ermöglicht ein besonders einfaches Arretieren der Maschineneinheit in einer gewünschten Drehstellung.

Es könnte auch vorgesehen sein, dass das erste Frästischteil oder das zweite Frästischteil über eine Linearführung mit dem Parallelanschlag gekoppelt ist oder eine Schwinge bildet, welche über ein bezüglich der Werkzeugachse exzentrisches Gelenk oder Scharnier mit dem Parallelanschlag gekoppelt ist. Eine Kopplung des Parallelanschlags mit dem zugehörigen Frästischteil über eine Linearführung, beispielsweise eine Gleitstangenführung, ermöglicht eine einfache Verstellbarkeit des Parallelanschlags. Ein Ausschwenken der Schwinge ist eine alternative Möglichkeit zum Verstellen des Parallelanschlags.

Ein weiterer Aspekt der Erfindung betrifft eine Oberfräse mit einem auf eine Werkstückoberfläche aufsetzbaren Frästisch und einer mit dem Frästisch verbundenen Maschineneinheit, die ein um eine Werkzeugachse rotierend angetriebenes Fräswerkzeug umfasst, wobei das Fräswerkzeug zum Eintauchen in ein Werkstück axial durch eine Aussparung des Frästischs hindurch bewegbar ist.

Erfindungsgemäß ist eine solche Oberfräse in eine Werkzeugwechselkonfiguration bringbar, in welcher der Frästisch von einem axialen Umgebungsbereich der Werkzeugachse entfernt ist. Mit anderen Worten kann der Frästisch in eine Position gebracht werden, in welcher seine äußeren Abmessungen nicht von der Werkzeugachse durchstoßen werden. In der Werkzeugwechselkonfiguration ist somit der Zugang zu dem Fräswerkzeug bzw. zu einer das Fräswerkzeug mit einer Antriebswelle verbindenden Befestigungseinrichtung erleichtert.

Gemäß einer Ausgestaltung der Erfindung ist der Frästisch zum Herbeiführen der Werkzeugwechselkonfiguration von der Maschineneinheit abnehmbar. Er kann dann zum Durchführen eines Werkzeugwechsels beiseitegelegt und nach dem Werkzeugwechsel wieder an der Maschineneinheit montiert werden.

Der Frästisch kann auch beweglich mit der Maschineneinheit verbunden und zum Herbeiführen der Werkzeugwechselkonfiguration aus dem axialen Umgebungsbereich der Werkzeugachse herausbewegbar, insbesondere herausschiebar oder herausschwenkbar, sein. Dadurch ist eine verliersichere Entfernung des Frästischs von dem axialen Umgebungsbereich der Werkzeugachse ermöglicht.

Es kann auch eine Sicherheitseinrichtung vorgesehen sein, welche einen Antrieb des Fräswerkzeugs unterbindet, wenn sich die Oberfräse in der Werkzeugwechselkonfiguration befindet. Hierdurch können Unfälle aufgrund eines versehentlich während des Werkzeugwechsels anlaufenden Fräswerkzeugs vermieden werden.

Gemäß einer speziellen Ausgestaltung der Erfindung blockiert die Sicherheitseinrichtung eine Antriebswelle für das Fräswerkzeug und/oder einen Schalter zum Aktivieren des Antriebs des Fräswerkzeugs, wenn sich die Oberfräse in der Werkzeugwechselkonfiguration befindet. Die Sicherheitseinrichtung kann beispielsweise in ein Lüfterrad eines Motors des Antriebs eingreifen. Eine redundante Antriebshemmung in Form einer mechanischen und einer elektrischen Blockierung ermöglicht einen besonders hohen Sicherheitsgrad.

Es kann vorgesehen sein, dass die Maschineneinheit über wenigstens eine zu dem Fräswerkzeug beabstandete Führungssäule mit dem Frästisch verbunden ist, wobei der Frästisch gegenüber der Maschineneinheit um die Führungssäule verschwenkbar ist. Die Führungssäule kann zu diesem Zweck unverschwenkbar am Frästisch und verschwenkbar an der Maschineneinheit angebracht sein oder umgekehrt. Vorzugsweise ist die Führungssäule sowohl in einer unverschwenkten Grundstellung als auch in einer verschwenkten Werkzeugwechselstellung arretierbar.

Eine weitere Ausführungsform der Erfindung sieht vor, dass die Maschineneinheit ferner über wenigstens eine weitere zu dem Fräswerkzeug beabstandete Führungssäule mit dem Frästisch verbunden ist, wobei die weitere oder jede weitere Führungssäule von dem Frästisch oder von der Maschineneinheit lösbar ist. Vertikale Führungssäulen dienen bei Oberfräsen gängigerweise dazu, ein Eintauchen des Fräswerkzeugs durch Absenken der Maschineneinheit gegenüber dem Frästisch zu ermöglichen. Diese Führungssäulen können günstigerweise dazu benutzt werden, ein Herausschwenken des Frästisches aus dem axialen Umgebungsbereich des Fräswerkzeugs zu ermöglichen, indem z.B. eine Führungssäule verschwenkbar und alle übrigen Führungssäulen von dem Frästisch lösbar ausgeführt werden.

Ein weiterer Aspekt der Erfindung betrifft einen Werkzeugadapter für eine Oberfräse, welche insbesondere wie vorstehend oder nachstehend beschrieben ausgestaltet ist, mit einem ersten Verbindungsabschnitt, der zum lösbaren formschlüssigen Koppeln mit einer angetriebenen Werkzeugwelle der Oberfräse ausgebildet ist, und mit einem zweiten Verbindungsabschnitt, welcher mit einem Fräswerkzeug lösbar gekoppelt oder koppelbar ist.

Mittels eines solchen Werkzeugadapters kann an einer Oberfräse mit spezieller formschlüssiger Werkzeugaufnahme auch ein Fräswerkzeug ohne ein entsprechendes formschlüssiges Kopplungsmerkmal angebracht werden. Die Einsatzmöglichkeiten einer Oberfräse hinsichtlich der Verwendung unterschiedlicher Fräswerkzeuge werden somit erweitert.

Es kann vorgesehen sein, dass das Fräswerkzeug zum Einstellen einer vorgegebenen Werkzeuglänge in unterschiedlichen Stellungen mit dem zweiten Verbindungsabschnitt koppelbar ist.

Insbesondere kann der zweite Verbindungsabschnitt eine hohlzylindrische Aufnahme für einen Schaft eines Standard-Fräswerkzeugs umfassen. Zum Fixieren des Schafts in der hohlzylindrischen Aufnahme kann beispielsweise eine Klemmschraube vorgesehen sein. Sofern die hohlzylindrische Aufnahme eine ausreichende Tiefe aufweist, kann der Schaft in unterschiedlichen Tiefenstellungen in der Aufnahme arretiert werden, um so auf einfache Weise eine vorgegebene Werkzeuglänge festzulegen.

Die Erfindung betrifft auch ein Adaptersystem mit einem Satz von Werkzeugadaptern wie vorstehend beschrieben. Ein Benutzer einer Oberfräse kann dann beispielsweise mehrere häufig benötigte Fräswerkzeuge mit

Adapter bereithalten, wobei dann ein Werkzeugwechsel in bequemer Weise ausschließlich über die formschlüssige Schnittstelle an der Maschine erfolgt. Mit anderen Worten kann der Benutzer den Satz von Werkzeugadaptern mit gekoppelten Fräswerkzeugen so benutzen, als handele es sich um einen Satz von Fräswerkzeugen, die speziell für ein formschlüssiges Koppeln mit der jeweiligen Oberfräse ausgestaltet sind.

Die zweiten Verbindungsabschnitte aller Werkzeugadapter des Satzes von Werkzeugadaptern können hierbei identisch ausgeführt sein.

Sollte die Verwendung von Fräswerkzeugen mit unterschiedlichem Schaft gewünscht sein, so können auch die zweiten Verbindungsabschnitte wenigstens zweier Werkzeugadapter und bevorzugt aller Werkzeugadapter des Satzes von Werkzeugadaptern unterschiedlich ausgeführt sein. Beispielsweise können Werkzeugadapter vorgesehen sein, deren zweite Verbindungsabschnitte hohlzylindrische Aufnahmen mit unterrschiedlichem Durchmesser aufweisen.

Es kann weiterhin vorgesehen sein, dass zusätzlich zu dem Satz von Werkzeugadaptern wenigstens ein weiterer Werkzeugadapter vorgesehen ist, welcher einen ersten Verbindungsabschnitt, der zum lösbaren formschlüssigen Koppeln mit einer angetriebenen Werkzeugwelle der Oberfräse ausgebildet ist, und einen zweiten Verbindungsabschnitt aufweist, welcher einstückig mit einem Fräswerkzeug ausgebildet ist. Durch einen solchen Werkzeug-/Adaptersatz kann die Flexibilität der Oberfräse weiter erhöht werden.

Ein weiterer Aspekt der Erfindung betrifft eine Vorrichtung zur Längenanpassung einer Anordnung aus einem Werkzeugadapter wie vorstehend beschrieben und einem mit diesem gekoppelten Fräswerkzeug.

Erfindungsgemäß ist eine Aufnahme für die Anordnung aus Werkzeugadapter und Fräswerkzeug vorgesehen, welche eine erste Anschlagfläche für ein axiales Ende des Fräswerkzeugs und eine um ein Sollmaß längs einer Werkzeugachse des Fräswerkzeugs von der ersten Anschlagfläche beabstandete zweite Anschlagfläche für eine Bezugsfläche des Werkzeugadapters aufweist. Durch eine solche Vorrichtung ist auf einfache Weise ein exaktes Einhalten einer gewünschten Gesamt-Werkzeuglänge möglich. Zur Längenanpassung wird das Fräswerkzeug mit dem Werkzeugadapter gekoppelt, also beispielsweise in eine Aufnahme eingesteckt, aber noch nicht arretiert. Anschließend wird die Anordnung in die Vorrichtung eingesteckt, bis das axiale Ende des Fräswerkzeugs an der ersten Anschlagfläche und nachfolgend der Werkzeugadapter selbst an der zweiten Anschlagfläche anstößt. Es ist dann sichergestellt, dass das gewünschte Sollmaß eingehalten ist und das Fräswerkzeug kann in dieser Stellung am Werkzeugadapter festgelegt werden.

Ein weiterer Aspekt der Erfindung betrifft eine Oberfräse mit einem auf eine Werkstückoberfläche aufsetzbaren Frästisch und einer mit dem Frästisch verbundenen Maschineneinheit, wobei der Frästisch eine auswechselbare Sohle mit einer zum Gleiten über die Werkstückoberfläche ausgebildeten Gleitfläche aufweist.

Erfindungsgemäß ist zum lösbaren Koppeln der Sohle mit einem Grundkörper des Frästischs wenigstens ein Einsteckstift an der Sohle und zumindest eine Stiftaufnahme für den Einsteckstift am Grundkörper vorgesehen oder umgekehrt, wobei in der Stiftaufnahme ein beweglicher Riegelabschnitt angeordnet ist, welcher wahlweise in eine Hinterschneidung des Einsteckstifts eingreift oder außer Eingriff mit der Hinterschneidung steht.

Eine lösbare Verbindung zwischen dem Grundkörper und der Sohle eines Frästischs ermöglicht die Verwendung unterschiedlicher Gleitsohlen oder Laufsohlen in Abhängigkeit von der jeweiligen Anwendung. Eine Kopplung von Grundkörper und Sohle mittels Einsteckstift und Stiftaufnahme erleichtert hierbei einen Austausch der Sohle. Beispielsweise kann bei Bedarf auch eine Sohle verwendet werden, welche einen so genannten Kopierring aufweist.

Vorzugsweise ist die Hinterschneidung durch eine umlaufende Nut in einer Mantelfläche des Einsteckstifts gebildet. Ein solcher genuteter Einsteckstift ist leicht und kostengünstig herstellbar.

Zumindest eine Seitenfläche der Nut kann bezüglich einer Längsachse des Einsteckstifts schräg verlaufen. Bei einem Druck des Riegelabschnitts gegen die Schrägfläche kann eine axiale Kraft auf den Einsteckstift ausgeübt werden, so dass die Sohle mit dem Einsteckstift gegen den Grundkörper des Frästischs gedrückt wird. Der Riegelabschnitt bewirkt somit nicht nur eine Verriegelung, sondern auch eine Verspannung der Sohle am Frästisch. Außerdem kann so eine exakte Positionierung der Sohle bezüglich der axialen Richtung gewährleistet werden.

Gemäß einer Ausführungsform der Erfindung sind wenigstens drei Anordnungen aus Einsteckstiften und zugeordneten Stiftaufnahmen vorgesehen, welche auf einem Kreis angeordnet sind, durch dessen Mittelpunkt die Drehachse eines Fräswerkzeugs der Oberfräse verläuft. Eine dreifache Befestigung der Sohle am Frästisch sorgt für eine ausreichend stabile Verbindung der beiden Baugruppen. Aufgrund der speziellen Anordnung der Einsteckstifte ist der Bereich um die Werkzeugachse frei von Befestigungselementen, so dass hier eine Aussparung für den Durchtritt des Fräswerkzeugs an der Sohle vorgesehen sein kann.

Die in den Stiftaufnahmen angeordneten Riegelabschnitte können an einem gemeinsamen, insbesondere ringförmigen, Schließorgan ausgebildet sein, welches zum gleichzeitigen Verriegeln aller Einsteckstifte in den jeweiligen Stiftaufnahmen um den Mittelpunkt verdrehbar ist. Dies ermöglicht eine besonders einfache Konstruktion. Insbesondere können durch Verdrehen eines einzigen Bauteils alle vorhandenen Einsteckstifte gleichermaßen verriegelt werden.

Ein weiterer Aspekt der Erfindung betrifft eine Oberfräse mit einem auf eine Werkstückoberfläche aufsetzbaren Frästisch und einer mit dem Frästisch verbundenen Maschineneinheit, wobei der Frästisch eine zum Auflegen auf die Werkstückoberfläche ausgebildete Auflagefläche aufweist.

Erfindungsgemäß ist ein an der Auflagefläche anbringbares Gleitstück zum ausgleichenden Abstützen des Frästischs auf der Werkstückoberfläche bei einseitiger Auflage des Frästischs auf einer Führungsschiene vorgesehen. Die Oberfräse kann dann direkt auf eine Führungsschiene aufgesetzt werden, ohne dass es zu einem unerwünschten Verkippen des Fräswerkzeugs kommt. Bei Bedarf können auch mehrere Gleitstücke an unterschiedlichen Stellen der Auflagefläche anbringbar sein. Weiterhin kann das Gleitstück fest mit einer auswechselbaren Sohle wie vorstehend beschrieben verbunden sein.

Alternativ kann das Gleitstück jedoch auch von der Auflagefläche abnehmbar oder in der Auflage versenkbar sein. Dies ermöglicht einen einfachen Wechsel zwischen einer Werkzeugkonfiguration für direktes Aufsetzen des Frästisches auf eine Werkstückoberfläche und einer Werkzeugkonfiguration für einseitiges Aufsetzen der Oberfräse auf eine Führungsschiene.

Nachfolgend wird die Erfindung beispielhaft unter Bezugnahme auf die Zeichnung beschrieben.
- Fig. 1: ist eine vereinfachte Seitenansicht einer erfindungsgemäßen Oberfräse.
- Fig. 2: zeigt die Oberfräse gemäß Fig. 1 in einer Draufsicht.
- Fig. 3: ist eine Draufsicht auf einen Frästisch der Oberfräse gemäß Fig. 1.
- Fig. 4: ist eine Draufsicht auf einen Frästisch einer Oberfräse gemäß einer alternativen Ausführungsform der Erfindung.
- Fig. 5: ist eine vereinfachte Seitenansicht einer erfindungsgemäßen Oberfräse in einer Werkzeugwechselkonfiguration.
- Fig. 6: ist eine Draufsicht auf eine alternative Ausgestaltung einer erfindungsgemäßen Oberfräse in einer Werkzeugwechselkonfiguration.
- Fig. 7: zeigt einen erfindungsgemäßen Werkzeugadapter für eine Oberfräse, welcher mit einem Fräswerkzeug gekoppelt ist.
- Fig. 8: zeigt einen erfindungsgemäßen Werkzeugadapter für eine Oberfräse, welcher einstückig mit einem Fräswerkzeug ausgebildet ist.
- Fig. 9: ist eine vereinfachte seitliche Schnittdarstellung einer erfindungsgemäßen Vorrichtung zur Längenanpassung einer Anordnung aus einem Werkzeugadapter und einem mit diesem gekoppelten Fräswerkzeug.
- Fig. 10: zeigt einen Grundkörper eines Frästischs für eine erfindungsgemäße Oberfräse und eine lösbar mit dem Grundkörper koppelbare Sohle.
- Fig. 11: ist eine vergrößerte Ansicht eines an der Sohle gemäß Fig. 10 vorgesehenen Einsteckstifts.
- Fig. 12: zeigt den Frästisch gemäß Fig. 10 in einer teilweise aufgeschnittenen Ansicht von unten.
- Fig. 13: ist eine Seitenansicht einer erfindungsgemäßen Oberfräse, welche einseitig auf einer Führungsschiene aufliegt und durch ein an einer Auflagefläche eines Frästischs der Oberfräse angebrachtes Gleitstück ausgleichend auf einer Werkstückoberfläche abgestützt ist.

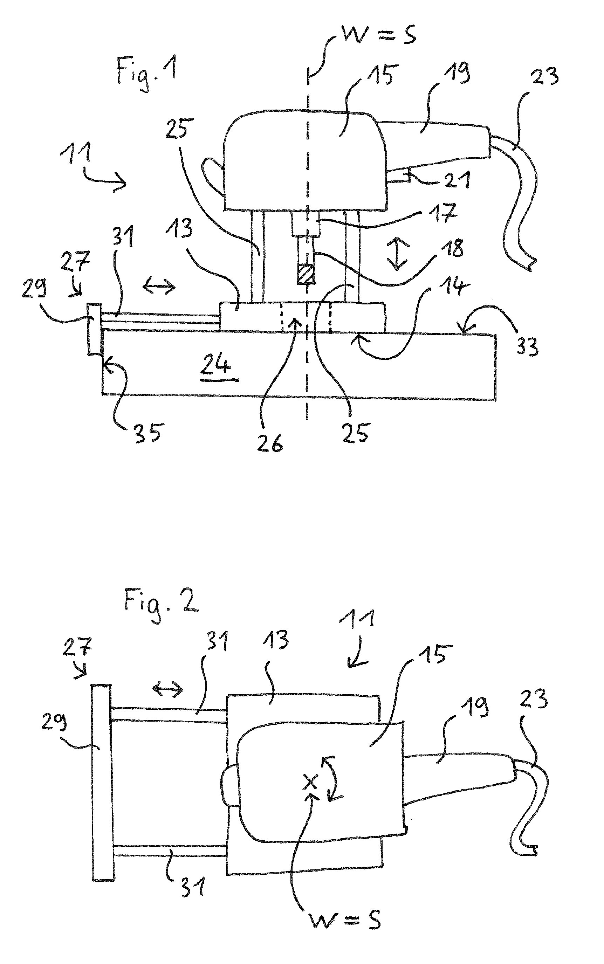

Gemäß Fig. 1 und 2 umfasst eine Oberfräse 11 einen Frästisch 13, welcher eine untere Anlagefläche 14 definiert, und eine Maschineneinheit 15. In der Maschineneinheit 15 ist ein nicht dargestellter Motor untergebracht, welcher eine aus der Maschineneinheit 15 herausragende Antriebswelle 17, deren Ende als Werkzeugaufnahme gestaltet ist, um eine Werkzeugachse W rotierend antreibt. Ein Fräswerkzeug 18 ist mit der Antriebswelle 17 lösbar gekoppelt. Die Maschineneinheit 15 weist ferner einen Handgriff 19 auf, an welchem ein Schalter 21 zum Aktivieren des Antriebs der Antriebswelle 17 angeordnet ist. Zur Versorgung der Maschineneinheit 15 mit elektrischer Energie ist ein Kabel 23 vorgesehen. Grundsätzlich könnte die Oberfräse 11 auch akkubetrieben oder druckluftbetrieben sein.

Die Maschineneinheit 15 ist in grundsätzlich bekannter Weise über Führungssäulen 25 derart mit dem Frästisch 13 gekoppelt, dass eine geradlinige Eintauchbewegung der Maschineneinheit 15 gegenüber dem Frästisch 13 entlang der Werkzeugachse W möglich ist. Um ein Eintauchen des Fräswerkzeugs 18 in ein Werkstück 24 zu ermöglichen, ist in dem Frästisch 13 eine Durchführung 26 vorgesehen.

An dem Frästisch 13 ist ein Parallelanschlag 27 vorgesehen, welcher hier eine Anschlagschiene 29 sowie zwei linear gegenüber dem Frästisch 13 verschiebbare Führungsstangen 31 umfasst. In der Darstellung gemäß Fig. 1 ist die Oberfräse 11 mittels des Frästisches 13 derart auf eine Werkstückoberfläche 33 aufgesetzt, dass die Anschlagschiene 29 des Parallelanschlags 27 an einer Werkstückkante 35 anschlägt.

Um die Handhabung der Oberfräse 11 bei Verwendung des Parallelanschlags 27 zu erleichtern, ist die Maschineneinheit 15 gegenüber dem Parallelanschlag 27 um eine Schwenkachse S verschwenkbar, welche hier mit der Werkzeugachse W zusammenfällt.

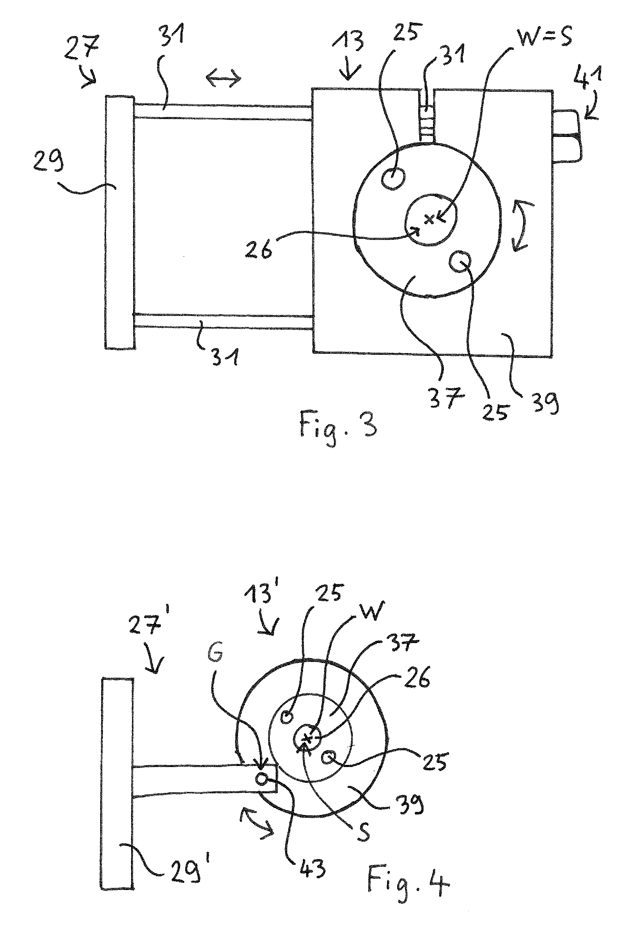

Wie aus Fig. 3 hervorgeht, ist die Verschwenkbarkeit der Maschineneinheit 15 gegenüber dem Frästisch 13 dadurch ermöglicht, dass der Frästisch 13 zweiteilig ausgeführt ist, wobei ein erstes Frästischteil 37 mit der Maschineneinheit 15 verbunden ist und ein zweites Frästischteil 39 der Halterung des Parallelanschlags 27 dient. In dem Ausführungsbeispiel gemäß Fig. 3 ist das erste Frästischteil 37 als Drehteller ausgebildet, welcher gleitend in dem als Drehaufnahme ausgebildeten zweiten Frästischteil 39 gelagert ist. Die beiden Führungsstangen 31 des Parallelanschlags 27 befinden sich hierbei seitlich neben dem ersten Frästischteil 37, so dass dessen Drehbewegung durch die Führungsstangen 31 nicht behindert wird. Mittels einer Klemmeinrichtung 41 kann das erste Frästischteil 37 in dem zweiten Frästischteil 39 verklemmt werden, so dass also durch Betätigung der Klemmeinrichtung 41 die Maschineneinheit 15 in jeder möglichen Schwenkstellung gegenüber dem Parallelanschlag 27 festgestellt werden kann.

In Fig. 4 ist eine alternative Ausgestaltung eines Frästischs 13' für die Oberfräse 11 gemäß Fig. 1 dargestellt, welcher ebenfalls ein erstes Frästischteil 37 und ein zweites Frästischteil 39 umfasst. Bei dieser Ausführungsform bildet das zweite Frästischteil 39 eine Schwinge, welche über ein bezüglich der Werkzeugachse W exzentrisches Gelenk oder Scharnier 43 mit dem Parallelanschlag 27' gekoppelt ist. Die Gelenkachse G des Gelenks 43 verläuft parallel zu der Werkzeugachse W, ist jedoch zu dieser beabstandet, so dass sich bei einem Verschwenken des zweiten Frästischteils 39 der Abstand der Anschlagschiene 29' des Parallelanschlags 27' von der Werkzeugachse W ändert. Der Parallelanschlag 27' kann auf diese Weise auf einen gewünschten Abstand eingestellt werden. Unabhängig von der Verschwenkbarkeit des zweiten Frästischteils 39 gegenüber dem Parallelanschlag 27' um die Gelenkachse G kann auch bei der Ausgestaltung gemäß Fig. 4 die mit dem ersten Frästischteil 37 verbundene Maschineneinheit 15 (Fig. 1) gegenüber dem zweiten Frästischteil 39 um eine mit der Werkzeugachse W zusammenfallende Schwenkachse S verschwenkt werden, um eine für den Benutzer günstige Stellung der Maschineneinheit 15 auszuwählen.

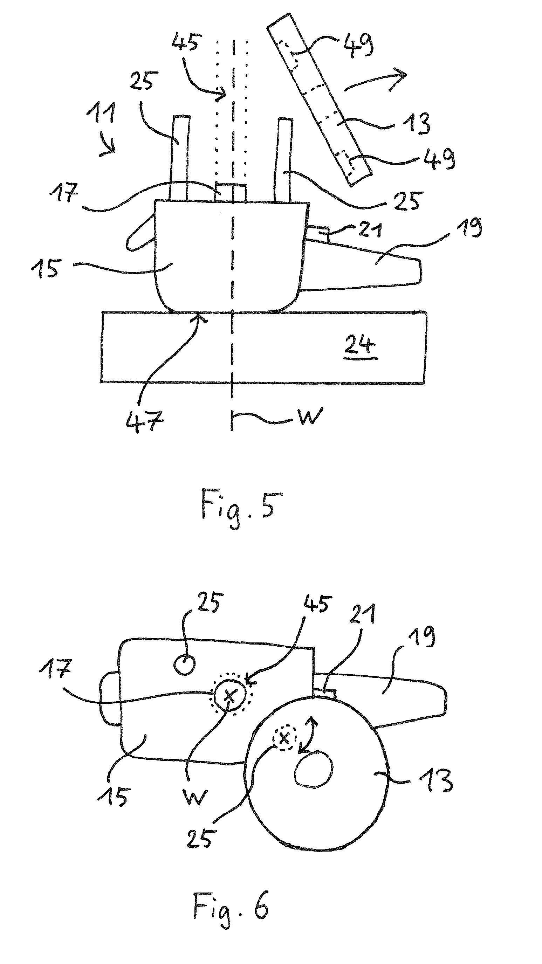

Die Oberfräse 11 kann wie in Fig. 5 dargestellt in eine Werkzeugwechselkonfiguration gebracht werden, in welcher der Frästisch 13 von einem durch gepunktete Linien gekennzeichneten axialen Umgebungsbereich 45 der Werkzeugachse W entfernt ist. Um einen Werkzeugwechsel zu vereinfachen, weist die Maschineneinheit 15 eine ebene Oberseite 47 auf, welche als Standfläche bei auf dem Kopf befindlicher Oberfräse 11 dienen kann. Bei der in Fig. 5 dargestellten Ausführungsform ist der Frästisch 13 zum Herbeiführen der Werkzeugwechselkonfiguration vollständig von der Maschineneinheit 15 abnehmbar. Zu diesem Zweck sind am Frästisch 13 selektiv verriegelbare Aufnahmen 49 für die Führungssäulen 25 vorgesehen, welche ein lösbares Verriegeln des Frästischs 13 an den Führungssäulen 25 ermöglicht.

Alternativ kann gemäß Fig. 6 der Frästisch 13 in der Werkzeugwechselkonfiguration auch an der Maschineneinheit 15 verbleiben. Um den Zugang zu der Antriebswelle 17 freizugeben, kann der Frästisch 13 hier um eine der Führungssäulen 25 aus dem axialen Umgebungsbereich 45 herausgeschwenkt werden. Prinzipiell könnte der Frästisch 13 auch weggeklappt oder weggeschoben werden. Eine in Fig. 5 und 6 nicht dargestellte Sicherheitseinrichtung sorgt dafür, dass die Antriebswelle 17 und der Schalter 21 blockiert werden, wenn sich die Oberfräse 11 in der Werkzeugwechselkonfiguration befindet oder in diese überführt wird. Hierdurch werden Unfälle beim Werkzeugwechsel verhindert.

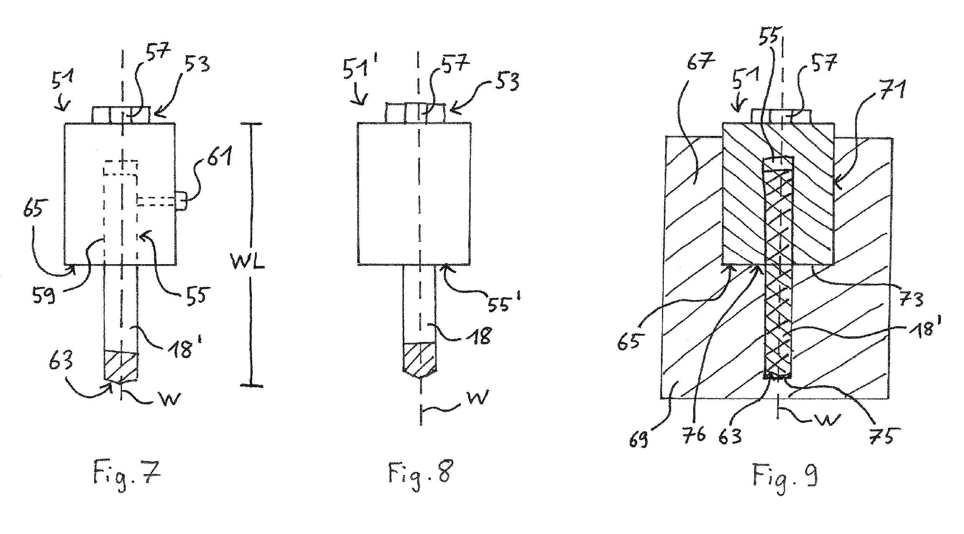

Fig. 7 zeigt einen Werkzeugadapter 51 für eine hier beschriebene Oberfräse 11, wobei der Werkzeugadapter 51 einen ersten Verbindungsabschnitt 53 sowie einen zweiten Verbindungsabschnitt 55 aufweist und dem Verbinden solcher Fräswerkzeuge 18' mit der der Oberfräse 11 dient, welche nicht an die durch das Ende der Antriebswelle 17 (Fig. 1) definierte Verbindungsschnittstelle angepasst sind. Konkret ist der erste Verbindungsabschnitt 53 mit formschlüssigen Eingriffsmerkmalen 57 versehen, welche zu komplementären Eingriffsmerkmalen (in Fig. 1 nicht dargestellt) der Antriebswelle 17 passen. Der zweite Verbindungsabschnitt 55 ist demgegenüber als einfache hohlzylindrische Aufnahme gestaltet. In die hohlzylindrische Aufnahme ist der zylindrische Schaft 59 eines als Standard-Fräsers ausgeführten Fräswerkzeugs 18' eingesteckt. Eine Klemmschraube 61 dient zum Fixieren des zylindrischen Schafts 59 in dem zweiten Verbindungsabschnitt 55. Es versteht sich, dass durch Verschieben des Schafts 59 innerhalb der durch den zweiten Verbindungsabschnitt 55 gebildeten Aufnahme vor dem Feststellen der Klemmschraube 61 die Werkzeuglänge WL an die jeweilige Anwendung angepasst werden kann.

Fig. 8 zeigt einen alternativen Werkzeugadapter 51', bei welchem der zweite Verbindungsabschnitt 55' einstückig mit dem Fräswerkzeug 18 ausgebildet ist.

Aus den in Fig. 7 und 8 dargestellten Werkzeugadaptern 51, 51' kann ein Adaptersystem zusammengestellt werden, welches einem Benutzer einer Oberfräse 11 die Arbeit mit unterschiedlichen Fräswerkzeugen 18, 18' erleichtert. Speziell kann ein solches Adaptersystem einen Satz von mehreren identischen Werkzeugadaptern 51 wie in Fig. 7 dargestellt umfassen. Bei Vorliegen mehrerer unterschiedlicher, in Form von Standardfräsern mit gleichem zylindrischem Schaft 59 vorliegender Fräswerkzeuge 18' können diese dann in jeweilige Werkzeugadapter 51 eingesetzt und dort belassen werden. Ein Werkzeugwechsel kann dann schneller vorgenommen werden als wenn nur einziger Werkzeugadapter 51 zur Verfügung stünde. Falls auch Fräswerkzeuge 18' mit einem anderen Schaftdurchmesser verwendet werden sollen, können dem Adaptersystem auch entsprechende Werkzeugadapter 51 mit abweichenden Aufnahmegrößen beigefügt werden.

Einem Satz von - identischen oder unterschiedlichen - Werkzeugadaptern 51 kann außerdem wenigstens ein Werkzeugadapter 51' wie in Fig. 8 dargestellt beigefügt werden, um das Adaptersystem zu erweitern. Derartige Adaptersysteme erleichtern einem Benutzer den Gebrauch einer Oberfräse 11 sowohl mit "maschinenspezifischen" Fräswerkzeugen 18 als auch mit "maschinenfremden" Fräswerkzeugen 18'.

Wie vorstehend angegeben ist bei dem Werkzeugadapter 51 gemäß Fig. 7 eine Anpassung der Werkzeuglänge WL möglich. Um hierbei ein vorgegebenes Sollmaß zwischen dem axialen Ende 63 des Fräswerkzeugs 18' und der vorderen Stirnfläche 65 des zweiten Verbindungsabschnitts 55 einzuhalten, ist eine in Fig. 9 dargestellte Lehre 67 zur Längenanpassung vorgesehen. Die Lehre 67 umfasst einen massiven Grundkörper 69, in welchem eine Aufnahme 71 für den Werkzeugadapter 51 ausgebildet ist. Die Aufnahme 71 ist hohlzylindrisch und bildet eine Stufe 73 aus. Während durch den Boden der Aufnahme 71 eine erste Anschlagfläche 75 für das axiale Ende 63 des Fräswerkzeugs 18' gebildet ist, definiert die Stufe 73 eine zweite Anschlagfläche 76 für die vordere Stirnfläche 65 des Werkzeugadapters 51. Durch Einsetzen eines Werkzeugadapters 51 mit in den zweiten Verbindungsabschnitt 55 eingestecktem, aber dort noch nicht fixiertem Fräswerkzeug 18' in die Aufnahme 71 der Lehre 67 kann somit auf einfache Weise das gewünschte Sollmaß für die Werkzeuglänge WL exakt eingestellt werden. Anschließend kann das Fräswerkzeug 18' in der Aufnahme des zweiten Verbindungsabschnitts 55 fixiert werden.

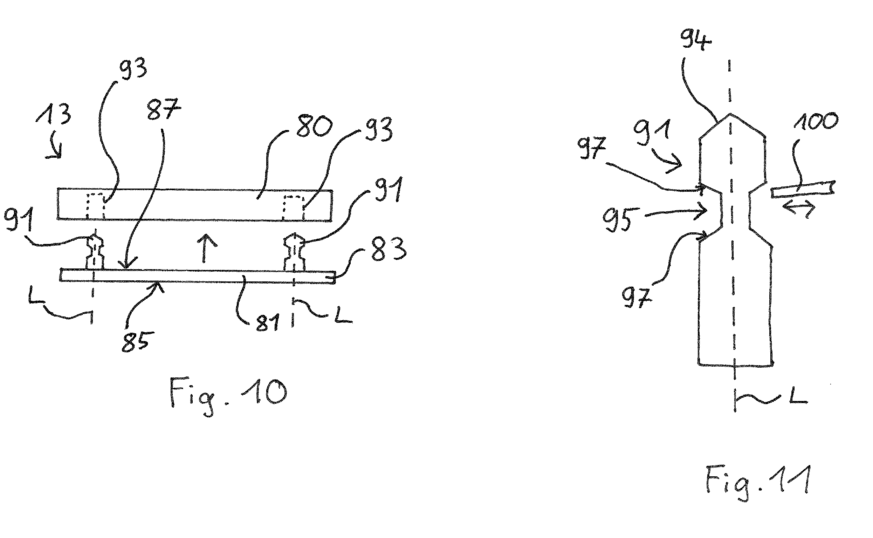

In Fig. 10 und 11 ist der Grundkörper 80 eines Frästischs 13 gemeinsam mit einer auswechselbaren Sohle 81 für den Frästisch 13 gezeigt. Die Sohle 81 weist ein plattenförmiges Basisbauteil 83 auf, dessen untere Flachseite 85 speziell zum Gleiten auf Werkstückoberflächen ausgebildet ist. Von der entgegengesetzten oberen Flachseite 87 der Sohle 81 stehen mehrere Einsteckstifte 91 ab, welche in entsprechenden Stiftaufnahmen 93 im Grundkörper 80 aufnehmbar sind.

Wie in Fig. 11 erkennbar weisen die Einsteckstifte 91 jeweils eine kegelförmige Spitze 94 sowie eine umfängliche Nut 95 auf. Die Seitenflächen 97 der Nut 95 verlaufen hierbei schräg zu der Längsachse L des zugehörigen Einsteckstifts 91.

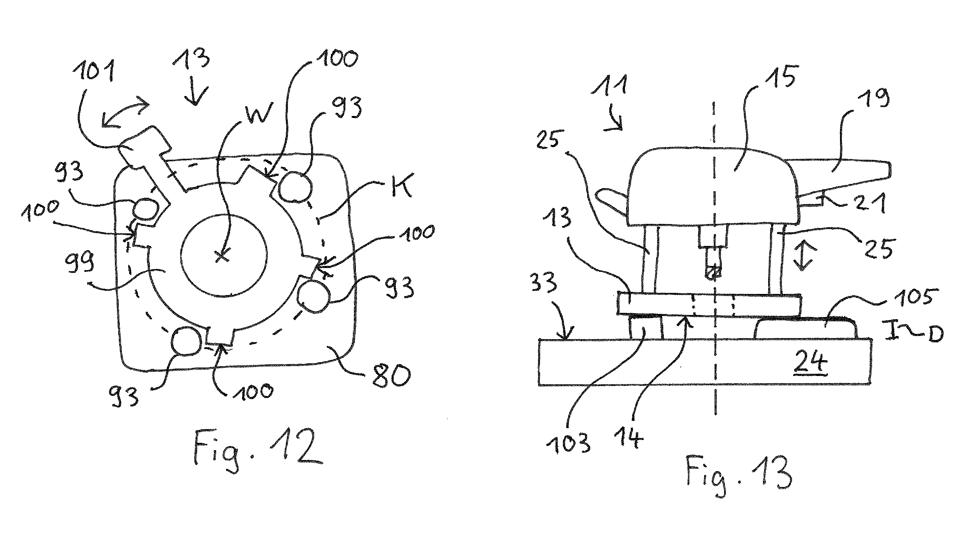

Aus Fig. 12 geht hervor, dass die Stiftaufnahmen 93 auf einem Kreis K angeordnet sind, durch dessen Mittelpunkt die Werkzeugachse W verläuft. Ein Schließring 99 mit Riegelvorsprüngen 100 ist derart konzentrisch zu dem Kreis K verdrehbar in dem Grundkörper 80 des Frästischs 13 gelagert, dass in einer ersten Drehstellung in jede Stiftaufnahme 93 ein Riegelvorsprung 100 eingreift, während in einer zweiten Drehstellung wie in Fig. 12 dargestellt alle Stiftaufnahmen 93 von den Riegelvorsprüngen 100 frei sind. Wenn sich die Einsteckstifte 91 (Fig. 10) in den Stiftaufnahmen 93 befinden und die Riegelvorsprünge 100 in die Stiftaufnahmen 93 hineinragen, greifen sie in die Nuten 95 ein, welche entsprechende Hinterschneidungen bilden, und sorgen so für eine Fixierung der Sohle 81 am Grundkörper 80. Aufgrund des Drucks der Riegelvorsprünge 100 gegen die schrägen Seitenflächen 97 der Nuten 95 wird die Sohle 81 gegen den Grundkörper 80 gedrückt, so dass eine korrekte Positionierung der Sohle 81 sichergestellt und eine unerwünschte Lockerung der Sohle 81 verhindert wird. Zum schnellen Auswechseln der Sohle 81 kann der Schließring 99 mittels eines äußeren Betätigungselements 101 gedreht werden.

In Fig. 13 ist eine ähnliche Oberfräse 11 wie in Fig. 1 gezeigt, wobei jedoch an der unteren Anlagefläche 14 des Frästisches 13 ein Gleitstück 103 zum ausgleichenden Abstützen des Frästischs 13 auf der Werkstückoberfläche 33 bei wie dargestellt einseitiger Auflage des Frästischs 13 auf einer Führungsschiene 105 vorgesehen ist. Das Gleitstück 103 weist zu diesem Zweck dieselbe Dicke D auf, wie die Führungsschiene 105, bei welcher es sich um eine gängige Standardführungsschiene handeln kann. Um auch ein Arbeiten ohne Führungsschiene 105 zu ermöglichen, kann das Gleitstück 103 von der unteren Anlagefläche 14 abnehmbar sein. Alternativ kann das Gleitstück 103 auch in der Anlagefläche 14 versenkbar sein. Von besonderem Vorteil ist es, wenn einem Benutzer ein komplettes System aus einer Oberfräse 11, einer dazugehörigen Führungsschiene 105, einem passenden Gleitstück 103 sowie einem Adaptersystem mit Werkzeugadaptern 51 gemäß Fig. 7 einschließlich mehrerer Werkzeugadapter 51' gemäß Fig. 8 zur Verfügung gestellt wird.

### Bezugszeichenliste

- 11: Oberfräse
- 13, 13': Frästisch
- 14: untere Anlagefläche
- 15: Maschineneinheit
- 17: Antriebswelle
- 18, 18': Fräswerkzeug
- 19: Handgriff
- 21: Schalter
- 23: Kabel
- 24: Werkstück
- 25: Führungssäule
- 26: Durchführung
- 27, 27': Parallelanschlag
- 29, 29': Anschlagschiene
- 31: Führungsstange
- 33: Werkstückoberfläche
- 35: Werkstückkante
- 37: erstes Frästischteil
- 39: zweites Frästischteil
- 41: Klemmeinrichtung
- 43: Gelenk
- 45: axialer Umgebungsbereich
- 47: ebene Oberseite
- 49: Säulenaufnahme
- 51, 51': Werkzeugadapter
- 53: erster Verbindungsabschnitt
- 55, 55': zweiter Verbindungsabschnitt
- 57: formschlüssiges Eingriffsmerkmal
- 59: Schaft
- 61: Klemmschraube
- 63: axiales Ende
- 65: vordere Stirnfläche
- 67: Lehre
- 69: Grundkörper
- 71: Aufnahme
- 73: Stufe
- 75: erste Anschlagfläche
- 76: zweite Anschlagfläche
- 80: Grundkörper
- 81: Sohle
- 83: plattenförmiges Basisbauteil
- 85: untere Flachseite
- 87: obere Flachseite
- 91: Einsteckstift
- 93: Stiftaufnahme
- 94: kegelförmige Spitze
- 95: Nut
- 97: Seitenfläche
- 99: Schließring
- 100: Riegelvorsprung
- 101: Betätigungselement
- 103: Gleitstück
- 105: Führungsschiene

- W: Werkzeugachse
- S: Schwenkachse
- G: Gelenkachse
- L: Längsachse
- K: Kreis
- WL: Werkzeuglänge

## Patentansprüche

1. Oberfräse (11) mit einem auf eine Werkstückoberfläche (33) aufsetzbaren Frästisch (13, 13') und einer mit dem Frästisch (13, 13') verbundenen Maschineneinheit (15), die ein um eine Werkzeugachse (W) rotierend angetriebenes Fräswerkzeug (18, 18') umfasst, wobei das Fräswerkzeug (18, 18') zum Eintauchen in ein Werkstück (24) axial durch eine Aussparung (26) des Frästischs (13, 13') hindurch bewegbar ist,
**dadurch gekennzeichnet, dass**
die Oberfräse (11) in eine Werkzeugwechselkonfiguration bringbar ist, in welcher der Frästisch (13, 13') von einem axialen Umgebungsbereich (45) der Werkzeugachse (W) entfernt ist.

2. Oberfräse nach Anspruch 1,
**dadurch gekennzeichnet, dass**
der Frästisch (13, 13') zum Herbeiführen der Werkzeugwechselkonfiguration von der Maschineneinheit (15) abnehmbar ist.

3. Oberfräse nach Anspruch 1 oder 2,
**dadurch gekennzeichnet, dass**
der Frästisch (13, 13') beweglich mit der Maschineneinheit (15) verbunden ist und zum Herbeiführen der Werkzeugwechselkonfiguration aus dem axialen Umgebungsbereich (45) der Werkzeugachse (W) herausbewegbar, insbesondere herausschiebbar oder herausschwenkbar, ist.

4. Oberfräse nach einem der Ansprüche 1 bis 3,
**dadurch gekennzeichnet, dass**
eine Sicherheitseinrichtung vorgesehen ist, welche einen Antrieb des Fräswerkzeugs (18, 18') unterbindet, wenn sich die Oberfräse in der Werkzeugwechselkonfiguration befindet.

5. Oberfräse nach Anspruch 4,
**dadurch gekennzeichnet, dass**
die Sicherheitseinrichtung eine Antriebswelle (17) für das Fräswerkzeug (18, 18') und/ oder einen Schalter (21) zum Aktivieren des Antriebs des Fräswerkzeugs (18, 18') blockiert, wenn sich die Oberfräse (11) in der Werkzeugwechselkonfiguration befindet.

6. Oberfräse nach einem der Ansprüche 1 bis 5,
**dadurch gekennzeichnet, dass**
die Maschineneinheit (15) über wenigstens eine zu dem Fräswerkzeug (18, 18') beabstandete Führungssäule (25) mit dem Frästisch (13, 13') verbunden ist, wobei der Frästisch (13, 13') gegenüber der Maschineneinheit (15) um die Führungssäule (25) verschwenkbar ist.

7. Oberfräse nach Anspruch 6,
**dadurch gekennzeichnet, dass**
die Maschineneinheit (15) ferner über wenigstens eine weitere zu dem Fräswerkzeug (18, 18') beabstandete Führungssäule (25) mit dem Frästisch (13, 13') verbunden ist, wobei die weitere oder jede weitere Führungssäule (25) von dem Frästisch (13, 13') oder von der Maschineneinheit (15) lösbar ist.

8. Oberfräse (11) mit einem auf eine Werkstückoberfläche (33) aufsetzbaren Frästisch (13, 13') und einer mit dem Frästisch (13, 13') verbundenen Maschineneinheit (15), die ein um eine Werkzeugachse (W) rotierend angetriebenes Fräswerkzeug (18, 18') umfasst, wobei der Frästisch (13, 13') einen Parallelanschlag (27, 27') zum Ansetzen der Oberfräse (11) an einer Werkstückkante (35) oder an einer Führungsschiene (105) umfasst,
**dadurch gekennzeichnet, dass**
die Maschineneinheit (15) gegenüber dem Parallelanschlag (27, 27') um eine parallel zu der Werkzeugachse (W) verlaufende Schwenkachse (S) verschwenkbar ist.

9. Oberfräse nach Anspruch 8,
**dadurch gekennzeichnet, dass**
die Schwenkachse (S) mit der Werkzeugachse (W) zusammenfällt, und/oder dass die Maschineneinheit (15) um wenigstens eine volle Umdrehung verschwenkbar ist.

10. Oberfräse nach einem der vorstehenden Ansprüche,
**dadurch gekennzeichnet, dass**
der Frästisch (13) ein mit der Maschineneinheit (15) verbundenes erstes Frästischteil (37) und ein mit dem Parallelanschlag (27) verbundenes zweites Frästischteil (39) umfasst, welche durch eine Schwenklagerung miteinander gekoppelt sind.

11. Oberfräse nach Anspruch 10,
**dadurch gekennzeichnet, dass**
das erste Frästischteil (37) oder das zweite Frästischteil (39) einen Drehteller bildet, welcher, insbesondere gleitend, in einer Drehaufnahme des anderen Frästischteils gelagert ist, wobei insbesondere Mittel (41) zum Feststellen, insbesondere Verklemmen des Drehtellers in der Drehaufnahme vorgesehen sind.

12. Oberfräse nach Anspruch 10,
**dadurch gekennzeichnet, dass**
das erste Frästischteil (37) oder das zweite Frästischteil (39) über eine Linearführung mit dem Parallelanschlag (27) gekoppelt ist oder eine Schwinge bildet, welche über ein bezüglich der Werkzeugachse (W) exzentrisches Gelenk oder Scharnier (43) mit dem Parallelanschlag (27') gekoppelt ist.

13. Oberfräse (11) mit einem auf eine Werkstückoberfläche (33) aufsetzbaren Frästisch (13, 13') und einer mit dem Frästisch (13, 13') verbundenen Maschineneinheit (15), wobei der Frästisch (13, 13') eine auswechselbare Sohle (81) mit einer zum Gleiten über die Werkstückoberfläche (33) ausgebildeten Gleitfläche aufweist,
**dadurch gekennzeichnet, dass**
zum lösbaren Koppeln der Sohle (81) mit einem Grundkörper (80) des Frästischs (13, 13') wenigstens ein Einsteckstift (91) an der Sohle (81) und zumindest eine Stiftaufnahme (93) für den Einsteckstift (91) am Grundkörper (80) vorgesehen ist oder umgekehrt, wobei in der Stiftaufnahme (93) ein beweglicher Riegelabschnitt (100) angeordnet ist, welcher wahlweise in eine Hinterschneidung (95) des Einsteckstifts (91) eingreift oder außer Eingriff mit der Hinterschneidung (95) steht.

14. Oberfräse nach Anspruch 13,
**dadurch gekennzeichnet, dass**
die Hinterschneidung (95) durch eine umlaufende Nut in einer Mantelfläche des Einsteckstifts (91) gebildet ist, wobei insbesondere zumindest eine Seitenfläche (97) der Nut (95) bezüglich einer Längsachse (L) des Einsteckstifts (91) schräg verläuft.

15. Oberfräse nach Anspruch 13 oder 14,
**dadurch gekennzeichnet, dass**
wenigstens drei Anordnungen aus Einsteckstiften (91) und zugehörigen Stiftaufnahmen (93) vorgesehen sind, welche auf einem Kreis (K) angeordnet sind, durch dessen Mittelpunkt die Drehachse eines Fräswerkzeugs (18, 18') der Oberfräse (11) verläuft, wobei insbesondere die in den Stiftaufnahmen (93) angeordneten Riegelabschnitte (100) an einem gemeinsamen, insbesondere ringförmigen, Schließorgan (99) ausgebildet sind, welches zum gleichzeitigen Verriegeln aller Einsteckstifte (91) in den jeweiligen Stiftaufnahmen (93) um den Mittelpunkt verdrehbar ist.
